# EUROPÄISCHE PATENTSCHRIFT

(11) **EP 3 292 932 B1**
(45) Veröffentlichungstag und Bekanntmachung des Hinweises auf die Patenterteilung: **15.05.2019**
(21) Anmeldenummer: 17181602.8
(22) Anmeldetag: 17.07.2017
(51) Int. Cl.: B23B 31/26

(54) **FEDERANORDNUNG ZUR ERZEUGUNG DER EINZUGSKRAFT EINER SPANNVORRICHTUNG UND SPANNVORRICHTUNG MIT EINER DERARTIGEN FEDERANORDNUNG**
SPRING ARRANGEMENT FOR GENERATING THE DRAW-IN FORCE OF A TENSIONING DEVICE AND TENSIONING DEVICE WITH SUCH A SPRING ARRANGEMENT
ENSEMBLE À RESSORT PERMETTANT DE GÉNÉRER LA FORCE DE SERRAGE D'UN DISPOSITIF DE SERRAGE ET DISPOSITIF DE SERRAGE POURVU D'UN TEL ENSEMBLE À RESSORT

(30) Priorität: 12.09.2016 DE 102016117083
(43) Veröffentlichungstag der Anmeldung: 14.03.2018
(73) Patentinhaber: Ott-Jakob Spanntechnik GmbH, 87663 Lengenwang (DE)
(72) Erfinder: Greif, Josef, 87496 Friesenried (DE); Mohr, Peter, 87487 Wiggensbach (DE); Reisacher, Bartholomäus, jun., 86807 Buchloe (DE)
(74) Vertreter: Charrier Rapp & Liebau

(56) Entgegenhaltungen:
- EP-A1- 3 028 795
- DE-A1-102014 112 479
- US-A- 4 801 019

## Beschreibung

Die Erfindung betrifft eine Federanordnung zur Erzeugung der Einzugskraft einer Spannvorrichtung nach dem Oberbegriff des Anspruchs 1. Eine solche Federanordnung ist aus EP 3 028 795 A bekannt. Die Erfindung betrifft außerdem eine Spannvorrichtung mit einer derartigen Federanordnung.

Werkzeugmaschinen oder Bearbeitungszentren weisen in der Regel eine in deren Arbeitsspindel integrierte Spannvorrichtung zum automatischen Spannen und Lösen von Werkzeugaufhahmen oder Bearbeitungswerkzeugen auf. Bei den bekannten Spannvorrichtungen werden die Werkzeugaufhahmen oder Bearbeitungswerkzeuge durch einen in der Arbeitsspindel angeordneten Spannsatz gehalten, der am vorderen Ende einer durch eine Federanordnung vorgespannten Spannstange angeordnet ist. Der Spannsatz enthält üblicherweise mehrere radial bewegliche kugel- oder zangenförmige Klemmelemente, durch welche die Werkzeugaufnahme oder das Bearbeitungswerkzeug in die Arbeitsspindel eingezogen wird. Durch die Federanordnung wird die Einzugskraft der Spannvorrichtung erzeugt. Zum Lösen der Spannvorrichtung wird die Spannstange durch eine so genannte Löseeinheit entgegen der Kraft der Federanordnung verschoben, so dass der Spannsatz mit den Klemmelementen geöffnet wird und das Bearbeitungswerkzeug freigibt. Als Federanordnungen zur Erzeugung der hier benötigten Einzugskraft werden üblicherweise Tellerfederpakete, Gasdruckfedern oder andere geeignete Federn eingesetzt.

Aus der DE 10 2014 112 479 A1 ist eine Knickfedereinrichtung mit mehreren konzentrisch um eine Mittelachse angeordneten Knickstäben offenbart, deren Enden in zwei in Axialrichtung voneinander beabstandeten, ringförmigen Aufnahmeeinrichtungen festgelegt sind. Die ringförmigen Aufnahmeeinrichtungen weisen mehrere in Umfangsrichtung gleichmäßig verteilte Schlitze auf, die als Lagereinrichtung zur klemmenden Aufnahme der Knickstabenden dienen. Durch die klemmende Halterung der Knickstabenden in den Schlitzen der Aufnahmeeinrichtungen werden die Enden der Knickstäbe bei deren Biegung an die Kanten am Ausgang der Schlitze in dem Aufhahmeelementen gedrückt, was zu Kerben oder anderen Beschädigungen der Knickstäbe und dadurch bedingten Ausfällen der Federanordnung führen kann.

Aufgabe der Erfindung ist, eine Federanordnung zur Erzeugung der Einzugskraft einer Spannvorrichtung und eine Spannvorrichtung mit einer derartigen Federanordnung zu schaffen, die eine hohe Stabilität und erhöhte Lebensdauer ermöglichen.

Diese Aufgabe wird durch eine Federanordnung mit den Merkmalen des Anspruchs 1 und durch eine Spannvorrichtung mit den Merkmalen des Anspruchs 14 gelöst. Zweckmäßige Weiterbildungen und vorteilhafte Ausgestaltungen der Erfindung sind in den Unteransprüchen angegeben.

Bei der erfindungsgemäßen Federanordnung sind die Enden der aus einem Faserverbundwerkstoff bestehenden Biegestäbe über jeweils ein an den Auflageeinrichtungen schwenkbar gelagertes Zwischenstück gelenkig mit den Auflageeinrichtungen verbunden. Dadurch können die Enden der Biegestäbe bei Komprimieren der Federanordnung in der Biegerichtung frei gekippt werden und werden nicht gegen ein festes seitliches Widerlager einer Aufnahme gedrückt. Damit kann die Beanspruchung der Biegestäbe im Bereich der Enden erheblich verringert und die Lebensdauer erhöht werden.

Die Zwischenstücke können zweckmäßigerweise in entsprechenden Gelenkauflagen an den Auflageeinrichtungen schwenkbar gelagert sein. Durch die Zwischenstücke und die Gelenkauflagen wird so für die Enden der Biegestäbe eine Art Pendel- bzw. Schwenklager gebildet, das eine definierte Biegung der Biegestäbe mit möglichst geringer Belastung gewährleistet.

Die Gelenkauflagen können über den Umfang von ringförmigen Auflageteilen der Auflageeinrichtungen verteilt sein. Zweckmäßigerweise sind die Gelenkauflagen gleichmäßig über den Umfang verteilt.

In einer fertigungstechnisch vorteilhaften Ausführung können die Zwischenstücke in Form eines Zylinders und die dazugehörigen Gelenkauflagen als halbschalenförmige Vertiefungen ausgebildet sein. Die Zwischenstücke sind vorzugsweise als gesonderte Bauteile ausgeführt und können eine Aufnahme zum Einstecken des Endes eines Biegestabs aufweisen. Die Zwischenstücke können aber auch an den Biegestäben direkt angeformt sein.

Die Gelenkauflagen sind vorzugsweise derart angeordnet, dass die Längsachsen der Zwischenstücke in einer zur Mittelachse der Auflageeinrichtungen rechtwinklig verlaufenden Ebene liegen. Vorzugsweise sind die Gelenkauflagen außerdem so orientiert, dass sich die Längsachsen der Zwischenstücke nicht in der Mittelachse der Auflageeinrichtungen schneiden sondern mit einem vorzugsweise gleichen Abstand von der Mittelachse beabstandet sind.

In einer für Spannvorrichtungen besonders geeigneten Ausführung sind die Biegestäbe zwischen äußeren Auflageeinrichtungen und mindestens einer dazwischen angeordneten inneren Auflageeinrichtung angeordnet. Dadurch können mehrere in Reihe angeordnete Federeinheiten geschaffen werden. Durch eine geeignete Auswahl oder Zusammenstellung mehrerer Federeinheiten können die gewünschten Federeigenschaften auf einfache Weise verändert und an die jeweiligen Anforderungen angepasst werden. Die Federanordnung kann aber auch nur zwei äußere Auflageeinrichtungen mit dazwischen angeordneten Biegestäben aufweisen.

Die äußeren Auflageeinrichtungen können in Form einer Bundbuchse mit einem ringförmigen Auflageteil und einem buchsenförmigen Führungsteil ausgebildet sein. Die innere Auflageeinrichtung weist zweckmäßigerweise ein ringförmiges Auflageteil und zwei von beiden Seiten des Auflageteils vorstehende, buchsenförmige Führungsteile auf. Die buchsenförmigen Führungsteile können auch als Anschlag dienen, durch den sichergestellt werden kann, dass nicht nur eine der in Reihe angeordneten Federeinheiten den Federhub übernimmt, während die andere Federeinheit keinen oder nur einen geringen Federanteil trägt.

Die Erfindung betrifft außerdem eine Spannvorrichtung zum Spannen eines Werkstücks oder eines Werkzeugs bzw. einer Werkzeugaufnahme an einem Maschinenteil einer Werkzeugmaschine, wobei die Spannvorrichtung eine axial verschiebbare Spannstange, einem über die Spannstange zwischen einer Spannstellung und einer Lösestellung bewegbaren Spannsatz und eine vorstehend beschriebene Federanordnung zur Erzeugung der Einzugskraft des Spannsatzes enthält. Die Spannvorrichtung kann z.B. in eine motorisch drehbare Arbeitsspindel oder ein anderes Maschinenteil integriert sein.

Die Auflageeinrichtungen der Federanordnung sind zweckmäßigerweise auf der Spannstange axial verschiebbar und gegenüber der Spannstange gegen Verdrehung gesichert angeordnet.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: eine in eine Arbeitsspindel einer Werkzeugmaschine eingebaute Spannvorrichtung in einem Längsschnitt;
- **Figur 2**: ein Teil einer Federanordnung der in Figur 1 gezeigten Spannvorrichtung in einer Perspektive;
- **Figur 3**: die Federanordnung von Figur 2 in einer Seitenansicht;
- **Figur 4**: ein Zwischenstück der Federanordnung von Figur 2 in einer Perspektive und
- **Figur 5**: eine Draufsicht auf die erste äußere Auflageeinrichtung.

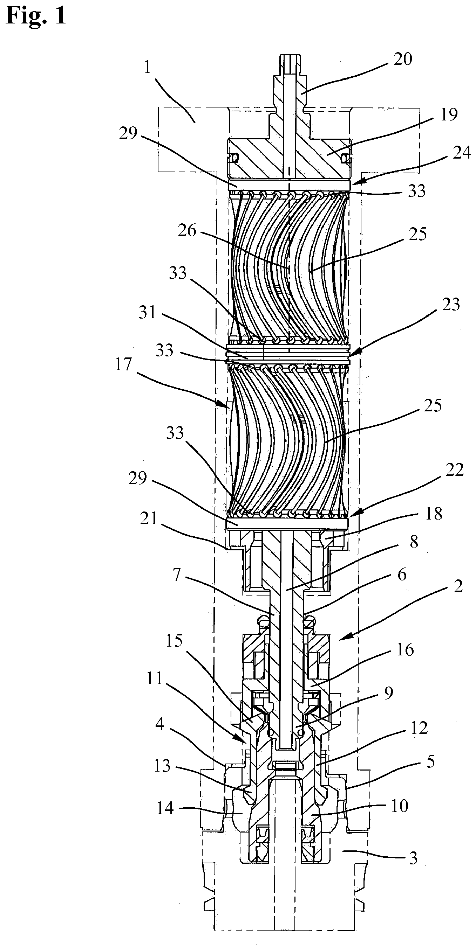

In Figur 1 ist eine Bearbeitungseinheit einer Werkzeugmaschine mit einer in einem Maschinenteil 1 integrierten Spannvorrichtung 2 zum Spannen eines Werkstücks oder Werkzeugs bzw. einer Werkzeugaufnahme 3 dargestellt. Bei der gezeigten Ausführung ist das Maschinenteil 1 eine innerhalb eines Spindelgehäuses drehbar gelagerte und durch einen Antrieb rotatorisch angetriebene Arbeitsspindel, die an ihrem in Figur 1 unten angeordneten vorderen Ende einen Innenkegel 4 für die Aufnahme eines hier als Hohlschaftkegel ausgebildeten Außenkegels 5 der Werkzeugaufnahme 3 oder eines Fräsers, Bohrers bzw. eines anderen Bearbeitungswerkzeugs enthält. Über die Spannvorrichtung 2 kann auch ein während der Bearbeitung rotierendes Werkstück gespannt werden. Das Maschinenteil 1 kann außerdem auch ein Bearbeitungstisch oder dgl. sein, in dem die Spannvorrichtung 1 zum Spannen eines Werkstücks oder Werkzeugs eingebaut ist.

Die Spannvorrichtung 2 enthält eine innerhalb einer Bohrung 6 des Maschinenteils 1 axial verschiebbare Spannstange 7, die bei der gezeigten Ausführung mit einer Durchgangsbohrung 8 für die Zuführung eines Kühlschmiermittels zur Werkzeugaufnahme 3 bzw. zum Werkzeug versehen ist. An dem zur Werkzeugaufnahme 3 weisenden vorderen Ende 9 der Spannstange 7 ist ein Spannkegel 10 eines an sich bekannten Spannsatzes 11 befestigt ist. Der Spannsatz 11 enthält bei der gezeigten Ausführung eine um den Spannkegel 10 angeordnete Spannzange mit mehreren zangenförmigen Klemmelementen 12, die durch axiale Verschiebung des Spannkegels 10 zur Klemmung bzw. Freigabe des Werkzeugkegels 5 radial beweglich sind. Der Spannsatz 11 kann aber auch mit radial beweglichen Kugeln oder anderen Klemmelementen versehen sein.

Die zangenförmigen Klemmelemente 12 des Spannsatzes 11 greifen mit ihren äußeren Enden 13 in eine Ringnut 14 der Werkzeugaufnahme 3 ein. Mit ihren inneren Enden 15 sind die zangenförmigen Klemmelemente 12 an einer Stützhülse 16 abgestützt. Die Spannstange 7 wird durch eine innerhalb des Maschinenteils 1 angeordnete Federanordnung 17 in eine in das Maschinenteil 1 eingezogene Spannstellung vorgespannt. In der eingezogenen Spannstellung werden die zangenförmigen Klemmelemente 12 des Spannsatzes 11 über den am vorderen Ende der Spannstange 7 angeordneten Spannkegel 10 radial nach außen gedrückt und so axial verschoben, dass die Werkzeugaufnahme 3 in den Innenkegel 4 am vorderen Ende des hier als Arbeitsspindel ausgebildeten Maschinenteils eingezogen und dort geklemmt wird.

Die im Folgenden noch näher beschriebene Federanordnung 17 ist an der einen Seite an einer innerhalb des Maschinenteils 2 abgestützten Anlagebuchse 18 und an der anderen Seite an einem im Durchmesser vergrößerten Bund 19 an dem von der Werkzeugaufnahme 3 abgewandten hinteren Ende 20 der Spannstange 7 abgestützt. Die Anlagebuchse 18 liegt an einem inneren Ringabsatz 21 der Bohrung 6 des hier als Arbeitsspindel ausgebildeten Maschinenteils 2 an. Zum Lösen der Spannvorrichtung 2 wird die Spannstange 7 über eine hier nicht dargestellte Löseeinheit entgegen der Kraft der Federanordnung 17 nach vorne in Richtung der Werkzeugaufnahme 3 gedrückt. Die hydraulisch, pneumatisch oder auch elektrisch angetriebene Löseeinheit kann an dem von der Werkzeugaufnahme 3 abgewandten hinteren Ende 20 der Spannstange 7 angeordnet sein. Über die beim Lösevorgang von der Löseeinheit nach vorne geschobene Spannstange 7 wird auch der Spannkegel 10 nach vorne in Richtung der Werkzeugaufnahme 3 verschoben, so dass sich die zangenförmigen Klemmelemente 12 radial nach innen bewegen können und die Werkzeugaufnahme 3 zum Werkzeugwechsel freigeben.

Die Federanordnung 17 enthält mehrere in Axialrichtung voneinander beabstandete Auflageeinrichtungen 22, 23 und 24, zwischen denen mehrere in Umfangsrichtung voneinander beabstandete Biegestäbe 25 angeordnet sind. Bei der gezeigten Ausführung weist die Federanordnung 17 eine an der Anlagebuchse 18 anliegende erste äußere Auflageeinrichtung 22, eine an dem Bund 19 am hinteren Ende der Spannstange 20 anliegende zweite äußere Auflageeinrichtung 24 und eine dazwischen angeordnete innere Auflageeinrichtung 23 auf. Zwischen der ersten äußeren Auflageeinrichtung 22 und der inneren Auflageeinrichtung 23 sowie zwischen zweiten äußeren Auflageeinrichtung 24 und der inneren Auflageeinrichtung 23 sind mehrere um eine Mittelachse 26 der Auflageeinrichtungen 22, 23 und 24 koaxial und in Umfangsrichtung voneinander beabstandet angeordnete Biegestäbe 25 vorgesehen. Durch die erste äußere Auflageeinrichtung 22, die innere Auflageeinrichtung 23 und die dazwischen angeordneten Biegestäbe 25 wird eine erste Federeinheit und durch die zweite äußere Auflageeinrichtung 24, die innere Auflageeinrichtung 23 und die dazwischen angeordneten Biegestäbe 25 eine mit der ersten Federeinheit in Reihe angeordnete zweite Federeinheit gebildet.

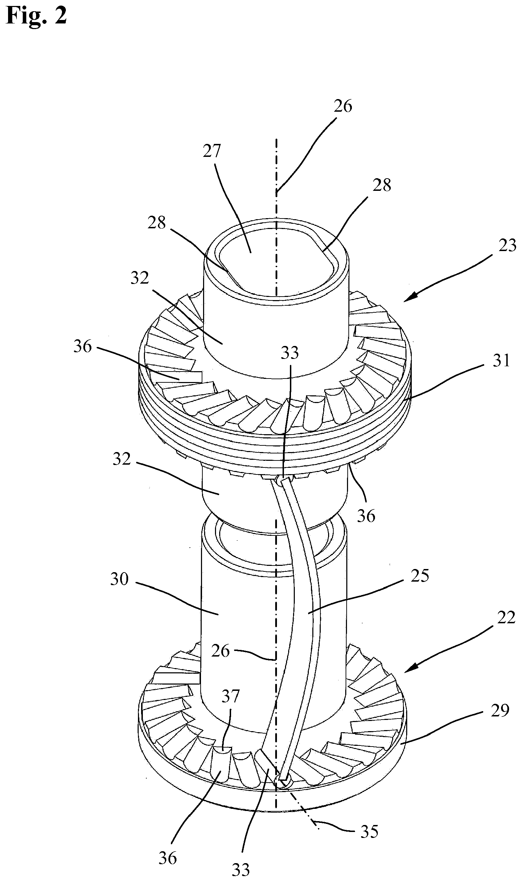

Die Biegestäbe 25 weisen bei dem gezeigten Ausführungsbeispiel einen rechteckigen Querschnitt auf und sind aus GFK, CFK oder aus einem anderen Faserverbundwerkstoff hergestellt. Die Auflageeinrichtungen 22, 23 und 24 sind auf der Spannstange 7 axial verschiebbar, jedoch gegenüber dieser gegen Verdrehung gesichert angeordnet. Hierzu können die Auflageeinrichtungen 22, 23 und 24 an der Innenseite ihrer Durchgangsöffnung 27 z.B. zwei in Figur 2 bei der mittleren Auflageeinrichtung 23 gezeigte, gegenüberliegende Abflachungen 28 aufweisen, die mit entsprechenden Abflachungen an der Außenseite der Spannstange 7 zusammenwirken.

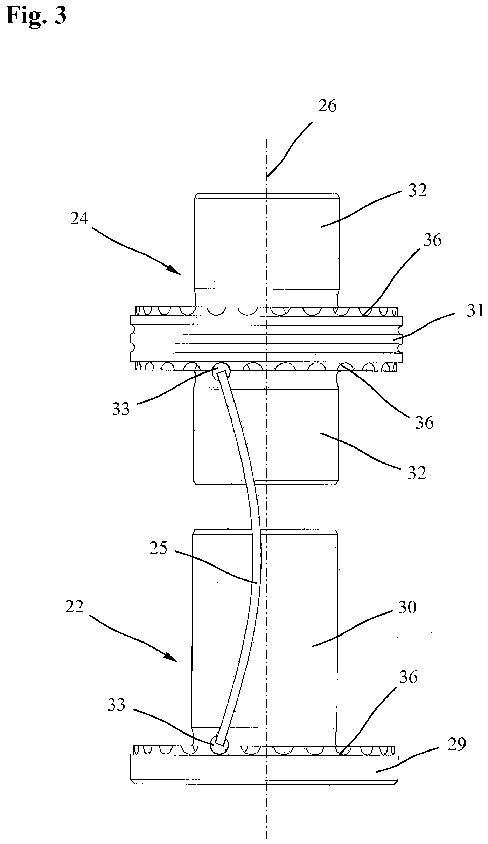

In den Figuren 2 und 3 sind die erste äußere Auflageeinrichtung 22, die mittlere Auflageeinrichtung 23 und einer der dazwischen angeordneten Biegestäbe 25 in einer Perspektive und einer Seitenansicht gezeigt. Wie aus diesen Darstellungen hervorgeht, ist die erste äußere Auflageeinrichtung 22 in Form einer Bundbuchse mit einem ringförmigen Auflageteil 29 und einem buchsenförmigen Führungsteil 30 ausgeführt. Die hier nicht dargestellte zweite äußere Auflageeinrichtung 24 ist entsprechend ausgestaltet und lediglich um 180° gegenüber der ersten äußeren Auflageeinrichtung 22 gedreht. Die zwischen der ersten äußeren Auflageeinrichtung 22 und der zweiten äußeren Auflageeinrichtung 24 angeordnete innere Auflageeinrichtung 23 weist ein ringförmiges Auflageteil 31 und zwei von beiden Seiten des Auflageteils 31 vorstehende buchsenförmige Führungsteile 32 auf.

Die Länge der Führungsteile 30 an den äußeren Auflageeinrichtungen 22 bzw. 24 und die Länge der beiden Führungsteile 32 an der inneren Auflageeinrichtung 23 sind so aufeinander abgestimmt, dass die Auflageeinrichtungen 22, 23 und 24 beim Zusammendrücken nach einer vorgegebenen Axialbewegung und einer dadurch bedingten bestimmten Durchbiegung der Biegestäbe 25 zur Anlage gelangen. Die Führungsteile 30 und 32 dienen also beim Zusammendrücken der Federanordnung 17 als Anschläge, durch die sichergestellt werden kann, dass nicht nur eine der in Reihe angeordneten Federeinheiten den Federhub übernimmt, während die andere Federeinheit keinen oder nur einen geringen Federanteil trägt. Über die auch als Anschläge dienenden Führungsteile 30 und 32 wird gewährleistet, dass nach einer bestimmten vorgegebenen axialen Einfederung einer Federeinheit auch die andere Federeinheit komprimiert wird und zur Federwirkung beiträgt.

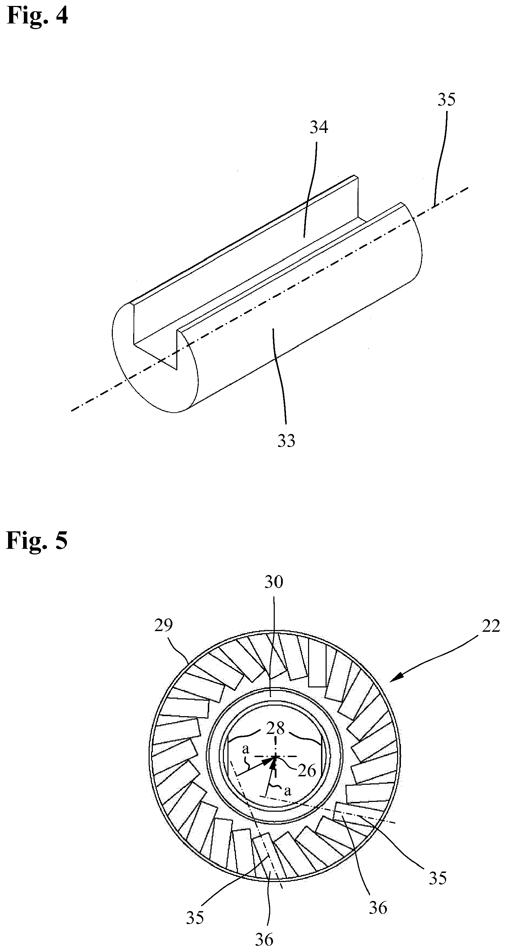

Wie aus den Figuren 2 und 3 hervorgeht, sind die beiden Enden der Biegestäbe 25 über jeweils ein an den Auflageeinrichtungen 22 und 23 schwenkbar gelagertes Zwischenstück 33 gelenkig mit den Auflageeinrichtungen 22 und 24 verbunden. Das in Figur 4 gesondert dargestellte Zwischenstück 33 weist bei der gezeigten Ausführung die Form eines Zylinders auf und ist mit einer in Längsrichtung verlaufenden, nutförmigen Aufnahme 34 zum Einstecken eines Endes der Biegestäbe 25 versehen. Die Zwischenstücke 33 könnten aber auch einstückig mit den Biegstäben 25 ausgeführt sein. Die hier als gesonderte Bauteile ausgeführten Zwischenstücke 33 sind gemäß Figur 2 um ihre Längsachse 35 drehbar in entsprechenden Gelenkauflagen 36 in den ringförmigen Auflageteilen 29 und 31 der Auflageeinrichtungen 22, 23 und 24 gelagert. Die Zwischenstücke 33 bilden zusammen mit den Gelenkauflagen 36 ein Pendellager, über das die Enden der Biegestäbe 25 drehbar gelagert sind. Bei der gezeigten Ausführung sind die Gelenkauflagen 36 als halbschalenförmige Vertiefungen in den ringförmigen Auflageteilen 29 und 31 der Auflageeinrichtungen 22, 23 und 24 ausgeführt. An den Gelenkauflagen 36 ist eine innere Anlagefläche 37 zur seitlichen Anlage des Zwischenstücks 33 vorgesehen.

In den beiden äußeren Auflageeinrichtungen 22 und 24 sind die als Vertiefungen ausgebildeten schalenförmigen Gelenkauflagen 36 an der zu dem Führungsteil 30 weisenden Seite des ringförmigen Auflageteils 29 angeordnet, wohingegen an der inneren Auflageeinrichtung 23 auf beiden Seiten des ringförmigen Auflageteils 29 entsprechende Gelenkauflagen 36 vorgesehen sind. Die über den Umfang der ringförmigen Auflageteile 29 und 31 gleichmäßig verteilten Gelenkauflagen 36 sind derart angeordnet, dass die Längsachsen 35 der zylindrischen Zwischenstücke 33 in einer zur Mittelachse 26 der Auflageeinrichtungen 22, 23 und 24 rechtwinklig verlaufenden Ebene liegen.

Wie aus Figur 5 hervorgeht, sind die Gelenkauflagen 36 außerdem so orientiert, dass die Längsachsen 35 der zylindrischen Zwischenstücke 33 mit einem Abstand a von der Mittelachse 26 beabstandet und in Umfangsrichtung gesehen jeweils um denselben Winkel weiterversetzt sind. Dadurch wird bei reduziertem Einbauraum eine optimale Biegung der Biegestäbe zur Erzielung der geforderten Federeigenschaften ermöglicht. Die Gelenkauflagen 36 können aber auch so orientiert sein, dass die Längsachsen 35 der zylindrischen Zwischenstücke 33 in Radialrichtung der ringförmigen Auflageteile 29 und 31 verlaufen.

Die Auflageeinrichtungen 22, 23 und 24 sind in Axialrichtung so gegeneinander vorgespannt, dass die dazwischen angeordneten Biegestäbe 25 über den gesamten Federweg der Federanordnung 17 gebogen sind. Die über den Umfang verteilten Biegestäbe 25 sind derart ausgerichtet, dass sie in derselben Richtung gebogen sind.

Bei der in Figur 1 gezeigten Spannvorrichtung 2 ist die auf der Spannstange 7 angeordnete und zwischen der Anlagebuchse 18 und dem Bund 19 abgestützte Federanordnung 17 derart vorgespannt, dass die Biegestäbe 25 sowohl in der in Figur 1 gezeigten Lösestellung als auch in der Spannstellung und damit über den gesamten Hub gebogen sind. In der in Figur 1 gezeigten Lösestellung der Spannvorrichtung wird die Spannstange 7 über eine hydraulisch, pneumatisch oder elektrisch betätigte Löseeinheit entgegen der Kraft der Federanordnung 17 in Richtung der Werkzeugaufnahme 3 gedrückt. Dabei werden die Biegestäbe 25 stärker gebogen und die zangenförmigen Klemmelemente 12 des Spannsatzes 11 können über den Spannkegel 10 und die Stützhülse 16 die in Figur 1 gezeigte, radial nach innen gedrückte Lösestellung einnehmen. In dieser Lösestellung geben die Klemmelemente 12 die Werkzeugaufnahme 3 zum Werkzeugwechsel frei.

Wird dagegen die Löseeinheit zurückgezogen, gelangen die Biegestäbe 25 in die Ausgangsstellung zurück und die Spannstange 7 wird durch die Federanordnung 17 in das Maschinenteil 1 eingezogen: Dadurch werden die Klemmelemente 12 über den Spannkegel 10 radial nach außen gedrückt und axial verschoben, so dass der Werkzeugkegel 5 der Werkzeugaufnahme 3 über die zangenförmigen Klemmelemente 12 in den Innenkegel 4 des Maschinenteils 1 eingezogen und gespannt wird.

Die erfindungsgemäße Spannvorrichtung ist nicht auf die vorstehend beschriebenen Ausführungsbeispiele beschränkt. So kann das erfindungsgemäße Spannsystem nicht nur bei Hohlkegelspannsystemen, sondern auch bei Steilkegelspannsystemen zum Einsatz gelangen. Der Spannsatz kann sowohl zur Halterung von Werkzeugen mit Hohlschaftkegel (HSK) als auch Halterung von Werkzeugen mit Steilkegel (SK) in Art einer Spannzange oder dgl. ausgeführt sein. Die Spannvorrichtung ist auch für die lösbare Halterung von Werkstücken geeignet.

### Bezugszeichenliste

- 1: Maschinenteil
- 2: Spannvorrichtung
- 3: Werkzeugaufnahme
- 4: Innenkegel
- 5: Außenkegel
- 6: Bohrung
- 7: Spannstange
- 8: Durchgangsbohrung
- 9: Vorderes Ende der Spannstange
- 10: Spannkegel
- 11: Spannsatz
- 12: Klemmelemente
- 13: Äußeren Enden der Klemmelemente
- 14: Ringnut
- 15: Inneren Enden der Klemmelemente
- 16: Stützhülse
- 17: Federanordnung
- 18: Anlagebuchse
- 19: Bund
- 20: Hinteres Ende der Spannstange
- 21: Ringabsatz
- 22: Erste äußere Auflageeinrichtung
- 23: Innere Auflageeinrichtung
- 24: Zweite äußere Auflageeinrichtung
- 25: Biegestab
- 26: Mittelachse
- 27: Durchgangsöffnung
- 28: Abflachung
- 29: Ringförmiges Auflageteil
- 30: Buchsenförmiges Führungsteil
- 31: Ringförmiges Auflageteil
- 32: Buchsenförmiges Führungsteil
- 33: Zwischenstück
- 34: Aufhahmenut
- 35: Längsachse
- 36: Gelenkauflage
- 37: Anlagefläche

## Patentansprüche

1. Federanordnung (17) zur Erzeugung der Einzugskraft einer Spannvorrichtung mit mehreren in Axialrichtung voneinander beabstandeten Auflageeinrichtungen (22, 23, 24), zwischen denen mehrere im Umfangsrichtung voneinander beabstandete Biegestäbe (25) aus einem Faserverbundwerkstoff angeordnet sind, **dadurch gekennzeichnet, dass** die Enden der Biegestäbe (25) über jeweils ein an den Auflageeinrichtungen (22, 23, 24) schwenkbar gelagertes Zwischenstück (33) gelenkig mit den Auflageeinrichtungen (22, 23, 24) verbunden sind.

2. Federanordnung (17) nach Anspruch 1, **dadurch gekennzeichnet, dass** die Zwischenstücke (33) in entsprechenden Gelenkauflagen (36) an den Auflageeinrichtungen (22, 23, 24) schwenkbar gelagert sind.

3. Federanordnung (17) nach Anspruch 2, **dadurch gekennzeichnet, dass** die Gelenkauflagen (36) über den Umfang von ringförmigen Auflageteilen (29, 30) der Auflageeinrichtungen (22, 23, 24) verteilt sind.

4. Federanordnung (17) nach Anspruch 2 oder 3, **dadurch gekennzeichnet, dass** die Zwischenstücke (33) um eine Längsachse (35) in dazugehörigen Gelenkauflagen (36) schwenkbar gelagert sind.

5. Federanordnung (17) nach Anspruch 4, **dadurch gekennzeichnet, dass** die Zwischenstücke (33) die Form eines Zylinders aufweisen und die Gelenkauflagen (36) als halbschalenförmige Vertiefungen ausgebildet sind.

6. Federanordnung (17) nach einem der Ansprüche 1 bis 4, **dadurch gekennzeichnet, dass** die Zwischenstücke (33) eine Aufnahme (34) zum Einstecken des Endes eines Biegestabs (25) aufweisen.

7. Federanordnung (17) nach einem der Ansprüche 4 bis 6, **dadurch gekennzeichnet, dass** die Gelenkauflagen (36) so angeordnet sind, dass die Längsachsen (35) der Zwischenstücke (33) in einer zur Mittelachse (26) der Auflageeinrichtungen (22, 23, 24) rechtwinklig verlaufenden Ebene liegen.

8. Federanordnung (17) nach einem der Ansprüche 4 bis 7, **dadurch gekennzeichnet, dass** die Gelenkauflagen (36) so orientiert sind, dass die Längsachsen (35) der Zwischenstücke (33) mit einem Abstand a von der Mittelachse (26) beabstandet sind.

9. Federanordnung (17) nach einem der Ansprüche 1 bis 8, **dadurch gekennzeichnet, dass** die Biegestäbe (25) zwischen äußeren Auflageeinrichtungen (22, 24) und mindestens einer dazwischen angeordneten inneren Auflageeinrichtung (23) angeordnet sind.

10. Federanordnung (17) nach einem der Ansprüche 1 bis 9, **dadurch gekennzeichnet, dass** mehrere in Umfangsrichtung voneinander beabstandete Biegestäbe (25) zwischen einer ersten äußeren Auflageeinrichtung (22) und einer inneren Auflageeinrichtung (24) sowie zwischen einer zweiten äußeren Auflageeinrichtung (23) und der inneren Auflageeinrichtung (24) angeordnet sind.

11. Federanordnung (17) nach Anspruch 9 oder 10, **dadurch gekennzeichnet, dass** die äußeren Auflageeinrichtungen (22, 24) in Form einer Bundbuchse mit einem ringförmigen Auflageteil (29) und einem buchsenförmigen Führungsteil (30) ausgebildet sind.

12. Federanordnung (17) nach einem der Ansprüche 9 bis 11, **dadurch gekennzeichnet, dass** die innere Auflageeinrichtung (24) ein ringförmiges Auflageteil (31) und zwei von beiden Seiten des Auflageteils (31) vorstehende, buchsenförmige Führungsteile (32) enthält.

13. Federanordnung (17) nach einem der Ansprüche 1 bis 12, **dadurch gekennzeichnet, dass** die Auflageeinrichtungen (22, 23, 24) in Axialrichtung so gegeneinander vorgespannt sind, dass die dazwischen angeordneten Biegestäbe (25) über den gesamten Federweg der Federanordnung (17) gebogen sind.

14. Spannvorrichtung zum Spannen eines Werkstücks oder eines Werkzeugs bzw. einer Werkzeugaufnahme (3) an einem Maschinenteil (2) einer Werkzeugmaschine mit einer axial verschiebbaren Spannstange (7), einem über die Spannstange (7) zwischen einer Spannstellung und einer Lösestellung bewegbaren Spannsatz (11) und einer der Spannstange (7) zugeordneten Federanordnung (17) zur Erzeugung der Einzugskraft des Spannsatzes (11), **dadurch gekennzeichnet, dass** die Federanordnung (17) nach einem der Ansprüche 1 bis 13 ausgebildet ist.

15. Spannvorrichtung nach Anspruch 14, **dadurch gekennzeichnet, dass** die Auflageeinrichtungen (22, 23, 24) der Federanordnung (17) auf der Spannstange axial verschiebbar (7) und gegenüber der Spannstange (7) gegen Verdrehung gesichert angeordnet sind.

## Claims

1. Spring arrangement (17) for generating the draw-in force of a clamping device with several support devices (22, 23, 24) spaced from one another in axial direction, between which several flexural rods (25) made of a fibrous composite material spaced from one another circumferentially are arranged, **characterised in that** the ends of the flexural rods (25) are connected with a hinge to the support devices (22, 23, 24) via respectively an intermediate piece (33) mounted to be pivotable on the support devices (22, 23, 24).

2. Spring arrangement (17) according to claim 1, **characterised in that** the intermediate pieces (33) are mounted to be pivotable on the support devices (22, 23, 24) in corresponding hinge supports (36).

3. Spring arrangement (17) according to claim 2, **characterised in that** the hinge supports (36) are distributed over the circumference of annular supports parts (29, 30) of the support devices (22, 23, 24).

4. Spring arrangement (17) according to claim 2 or 3, **characterised in that** the intermediate pieces (33) are mounted to be pivotable about a longitudinal axis (35) in associated hinge supports (36).

5. Spring arrangement (17) according to claim 4, **characterised in that** the intermediate pieces (33) have the shape of a cylinder and the hinge supports (36) are designed as shell-like depressions.

6. Spring arrangement (17) according to one of claims 1 to 4, **characterised in that** the intermediate pieces (33) have a holder (34) for inserting the end of a flexural rod (25).

7. Spring arrangement (17) according to one of claims 4 to 6, **characterised in that** the hinge supports (36) are arranged so that the longitudinal axes (35) of the intermediate pieces (33) lie in a plane running at right angles to the central axis (26) of the support devices (22, 23, 24).

8. Spring arrangement (17) according to one of claims 4 to 7, **characterised in that** the hinge supports (36) are orientated so that the longitudinal axes (35) of the intermediate pieces (33) are spaced from the central axis (26) by a distance a.

9. Spring arrangement (17) according to one of claims 1 to 8, **characterised in that** the flexural rods (25) are arranged between outer support devices (22, 24) and at least one inner support device (23) arranged therebetween.

10. Spring arrangement (17) according to one of claims 1 to 9, **characterised in that** several flexural rods (25) spaced from one another circumferentially are arranged between a first outer support device (22) and an inner support device (24) and between a second outer support device (23) and the inner support device (24).

11. Spring arrangement (17) according to claim 9 or 10, **characterised in that** the outer support devices (22, 24) are designed in the form of a flange sleeve with an annular support part (29) and a sleeve-like guide part (30).

12. Spring arrangement (17) according to one of claims 9 to 11, **characterised in that** the inner support device (24) contains an annular support part (31) and two sleeve-like guide parts (32) projecting from both sides of the support part (31).

13. Spring arrangement (17) according to one of claims 1 to 12, **characterised in that** the support devices (22, 23, 24) are prestressed with respect to one another in axial direction so that the flexural rods (25) arranged therebetween are curved over the entire spring path of the spring arrangement (17).

14. Clamping device for clamping a workpiece or a tool or a tool holder (3) on a machine part (2) of a tool machine using an axially displaceable clamping rod (7), a clamping set (11) which can be moved between a clamping position and a release position via the clamping rod (7) and a spring arrangement (17) assigned to the clamping rod (7) to generate the draw-in force of the clamping set (11), **characterised in that** the spring arrangement (17) is designed according to one of claims 1 to 13.

15. Clamping device according to claim 14, **characterised in that** the support devices (22, 23, 24) of the spring arrangement (17) are arranged on the clamping rod to be axially displaceable (7) and secured against rotation with respect to the clamping rod (7).

## Revendications

1. Ensemble à ressort (17) permettant de générer la force de serrage d'un dispositif de serrage avec plusieurs dispositifs d'appui (22, 23, 24) espacés dans le sens axial les uns des autres, entre lesquels plusieurs barres de flexion (25) espacées les unes des autres dans le sens périphérique en un matériau composite de fibre sont disposées, **caractérisé en ce que** les extrémités des barres de flexion (25) sont raccordées respectivement par le biais d'une pièce intermédiaire (33) logée de manière pivotante au niveau des dispositifs d'appui (22, 23, 24) par articulation aux dispositifs d'appui (22, 23, 24).

2. Ensemble à ressort (17) selon la revendication 1, **caractérisé en ce que** les pièces intermédiaires (33) sont logées de manière pivotante dans des appuis articulés (36) correspondants au niveau des dispositifs d'appui (22, 23, 24).

3. Ensemble à ressort (17) selon la revendication 2, **caractérisé en ce que** les appuis articulés (36) sont répartis sur la périphérie de pièces d'appui (29, 30) annulaires des dispositifs d'appui (22, 23, 24).

4. Ensemble à ressort (17) selon la revendication 2 ou 3, **caractérisé en ce que** les pièces intermédiaires (33) sont logées de manière pivotante autour d'un axe longitudinal (35) dans des appuis articulés (36) afférents.

5. Ensemble à ressort (17) selon la revendication 4, **caractérisé en ce que** les pièces intermédiaires (33) présentent la forme d'un cylindre et les appuis articulés (36) sont réalisés en tant que cavités en forme de demi-coque.

6. Ensemble à ressort (17) selon l'une quelconque des revendications 1 à 4, **caractérisé en ce que** les pièces intermédiaires (33) présentent un logement (34) pour l'enfichage de l'extrémité d'une barre de flexion (25).

7. Ensemble à ressort (17) selon l'une quelconque des revendications 4 à 6, **caractérisé en ce que** les appuis articulés (36) sont disposés de sorte que les axes longitudinaux (35) des pièces intermédiaires (33) se trouvent dans un plan s'étendant à angles droits par rapport à l'axe médian (26) des dispositifs d'appui (22, 23, 24).

8. Ensemble à ressort (17) selon l'une quelconque des revendications 4 à 7, **caractérisé en ce que** les appuis articulés (36) sont orientés de sorte que les axes longitudinaux (35) des pièces intermédiaires (33) soient espacés à une distance a de l'axe médian (26).

9. Ensemble à ressort (17) selon l'une quelconque des revendications 1 à 8, **caractérisé en ce que** les barres de flexion (25) sont disposées entre des dispositifs d'appui extérieurs (22, 24) et au moins un dispositif d'appui intérieur (23) disposé entre eux.

10. Ensemble à ressort (17) selon l'une quelconque des revendications 1 à 9, **caractérisé en ce que** plusieurs barres de flexion (25) espacées dans le sens périphérique l'une de l'autre sont disposées entre un premier dispositif d'appui extérieur (22) et un dispositif d'appui intérieur (24) ainsi qu'entre un second dispositif d'appui extérieur (23) et le dispositif d'appui intérieur (24).

11. Ensemble à ressort (17) selon la revendication 9 ou 10, **caractérisé en ce que** les dispositifs d'appui extérieurs (22, 24) sont réalisés sous la forme d'une douille à collerette avec une partie d'appui (29) annulaire et une partie de guidage (30) en forme de douille.

12. Ensemble à ressort (17) selon l'une quelconque des revendications 9 à 11, **caractérisé en ce que** le dispositif d'appui intérieur (24) contient une partie d'appui (31) annulaire et deux parties de guidage (32) en forme de douille dépassant des deux côtés de la partie d'appui (31).

13. Ensemble à ressort (17) selon l'une quelconque des revendications 1 à 12, **caractérisé en ce que** les dispositifs d'appui (22, 23, 24) sont précontraints dans le sens axial les uns contre les autres de sorte que les barres de flexion (25) disposées entre eux soient pliées sur la course de ressort entière de l'ensemble à ressort (17).

14. Dispositif de serrage pour le serrage d'une pièce ou d'un outil ou d'un logement d'outil (3) sur une partie de machine (2) d'une machine-outil avec une tige de serrage (7) mobile axialement, un ensemble de serrage (11) mobile par le biais de la tige de serrage (7) entre une position de serrage et une position de détachement et un ensemble à ressort (17) associé à la tige de serrage (7) pour la génération de la force de serrage de l'ensemble de serrage (11), **caractérisé en ce que** l'ensemble à ressort (17) est réalisé selon l'une quelconque des revendications 1 à 13.

15. Dispositif de serrage selon la revendication 14, **caractérisé en ce que** les dispositifs d'appui (22, 23, 24) de l'ensemble à ressort (17) sont mobiles (7) axialement sur la tige de serrage et sont disposés en étant bloqués contre la rotation par rapport à la tige de serrage (7).
